# EUROPEAN PATENT SPECIFICATION

(11) **EP 1 864 857 B1**
(45) Date of publication and mention of the grant of the patent: **19.10.2011**
(21) Application number: 07010525.9
(22) Date of filing: 25.05.2007
(51) Int. Cl.: B60Q 1/26, B60Q 1/04

(54) **Vehicular lamp to be mounted in a car body opening**
Fahrzeugleuchte, welche in einer Karosserieöffnung anbringbar ist
Lampe de véhicule destinée à être montée dans une ouverture de la carrosserie

(30) Priority: 30.05.2006 JP 2006150589
(43) Date of publication of application: 12.12.2007
(73) Proprietor: ICHIKOH INDUSTRIES, LTD., Tokyo (JP)
(72) Inventor: Ookawa, Takenori c/o Ichikoh Industries, Ltd.,, Isehara-shi, Kanagawa 259-1145 (JP)
(74) Representative: Grünecker, Kinkeldey, Stockmair & Schwanhäusser

(56) References cited:
- EP-A- 1 398 223
- WO-A-98/38063
- FR-A- 2 693 415
- FR-A- 2 810 283
- JP-A- 2007 331 744

## Description

### BACKGROUND OF THE INVENTION

### Field of the Invention

The present invention relates to a vehicular lamp, a vehicular lamp attachment method, a vehicular lamp attachment structure, and a vehicle.

### Description of the related art

Japanese Patent Application Laid-Open No. 8-67221 discloses vehicular lamps such as fog lamps attached to a vehicular body such as a vehicular front bumper.

A conventional vehicle lamp has a frame member and a lamp body fixed in the middle of the frame member. The frame member is made larger than the size of a lamp attachment openings formed in a bumper. In order to attach the lamp to the bumper, the lamp is inserted into the lamp attachment opening from the outside of the bumper to make an outer portion of the frame member abut on the periphery of the lamp attachment opening. Then, the frame member of the lump is fastened to the back face of the periphery of the lamp attachment opening by a screw

FR 2 810 283 A discloses a vehicular lamp. Said vehicular lamp comprises a frame member of a lamp body configured to be placed to abut on a periphery of a lamp attachment opening formed in a vehicular body. Said vehicular lamp further comprises a bracket slidably attached to a back face of the frame member. The vehicular lamp furthermore comprises a separate housing with closure means projecting the rearward side of the housing. The frame member has slots in vicinity of the brackets. After assembly of the vehicular lamp the housing lies with its flange against the periphery of the lamp attachment opening with the closure means projecting through the slots and being secured by the brackets.

WO 98/38063 A discloses a lamp for a vehicular. Said vehicular lamp comprises a frame member of a lamp body configured to be placed to abut on a periphery of a lamp attachment opening formed in a vehicular body. Said vehicular lamp further comprises a bracket attached to a back face of the frame member, the frame member and the bracket including fastened portions for fixing the bracket to the frame member by using fastening means. The bracket, which is slidable on the surface of the fastening means in axial direction of the fastening means, is set in the attachment opening to a slide position in order to clamp the peripheral edge of the attachment opening between frame member and bracket.

### SUMMARY OF THE INVENTION

According to such a conventional technique, the lamps and the brackets are provided independently, so that there have been some disadvantages in delivery or parts management. In addition, an operator needs to support the lamp placed on the back face of the lamp attachment opening by one hand, while fastening the lamp with screws by the other hand, so working efficiency in this process is low.

The present invention has been developed in view of such problems in the conventional technique and has an object to provide a vehicular lamp attachment structure capable of improving the working efficiency.

The present invention is a vehicular lamp as defined in claim 1 including a frame member of a lamp body configured to be placed to contact with a periphery of a lamp attachment opening formed in a vehicular body and a bracket slidably attached to a back face of the frame member. The bracket is slidable between a retracted position and a use position at outer side of the frame member than the retracted position.

According to the present invention, when the frame member is placed to contact with an outer periphery of the lamp attachment opening and the bracket is set in the use position, the periphery of the lamp attachment opening is sandwiched between the bracket in the used position and the frame member so that the vehicular lamp is fixed in the lamp attachment opening.

The frame member may be formed with a catch for engaging with the lamp attachment opening of the vehicular body

The vehicular lamp may further include a first locking means for fixing the bracket in the retracted position.

The vehicular lamp may further include a second locking means for fixing the bracket in the use position.

The first locking means may include a projection projected from the back face of the frame member and a projection projected from the bracket to engage with the projection of the frame member in the retracted position.

The second locking means may include a projection projected from the back face of the frame member and a projection projected from the bracket to engage with the projection of the frame member in the use position.

The frame member and the bracket may be formed with fastened portions opposed each other in the used position, the fastened portions configured to be fastened with a fastening means.

The sliding mechanism for slidably attaching the bracket on the back face of the frame member may include a long hole formed in the bracket and extending along the sliding direction of the bracket, a boss projected from the back face of the frame member and extending through the long hole of the bracket, and a flange attached on the tip of the boss and formed larger than the width of the long hole.

A vehicular lamp according to the invention may be attached by: inserting the vehicular lamp into a lamp attachment opening formed in a vehicular body from outside of the vehicular body to make a frame member formed around a lamp body of the vehicular lamp abut on a periphery of the lamp attachment opening; sliding a bracket slidably attached on a back face of the frame member of the lamp body from a retracted position at the inner side of the frame member to a use position at the outer side of the frame member to sandwich the periphery of the lamp attachment opening between the bracket and the frame member to fix the vehicular lamp in the lamp attachment opening; and fastening the fixed vehicular lamp to the periphery of the lamp attachment opening by a fastening means.

The vehicular lamp includes a lamp body, a frame member of the lamp body configured to be attached to a periphery of a lamp attachment opening formed in a vehicular body, and a bracket slidably attached to a back face of the frame member. The bracket is slidable between a retracted position at a inner portion of the frame member and a use position at an outer portion of the frame member. The outer portion of the frame member of the vehicular lamp abuts on the periphery of the lamp attachment opening and the bracket is set in the use position, so that the periphery of the lamp attachment opening is sandwiched between the bracket and the frame member such that the vehicular lamp is fixed in the lamp attachment opening, and, the vehicular lamp is fastened to the vehicular body by a fastening means.

### BRIEF DESCRIPTION OF THE DRAWINGS

Fig. 1 is a perspective view showing a bumper according to an embodiment of the present invention;
Fig. 2 is a view showing a fog lamp in a direction DA in Fig. 1;
Figs. 3A and 3B are perspective views showing the fog lamp having a bracket thereon, Fig. 3A shows a condition in which the bracket is in a retracted position, and Fig. 3B shows a condition in which the bracket is in a use position;
Fig. 4 is a perspective view showing the fog lamp from which the bracket is removed;
Fig. 5 is a perspective view showing a through hole and a boss;
Fig. 6 is a perspective view showing a long hole and a boss;
Fig. 7 is a sectional view taken along an arrow SA-SA in Fig. 5;
Fig. 8 is a sectional view taken along an arrow SB-SB in Fig. 6;
Fig. 9 is a sectional view showing the fog lamp;
Fig. 10 is a sectional view showing a condition in which the fog lamp is attached to an opening of the bumper,
Fig. 11 is a sectional view showing a slide condition of the bracket;
Fig. 12 is a sectional view showing a condition in which the bracket is in the use position, corresponding to Fig. 10; and
Fig. 13 is a sectional view showing the through hole and the boss in the fog lamp.

### DETAILED DESCRIPTION OF THE PREFERRED EMBODIMENTS

An embodiment of the present invention will be described with reference to the drawings.

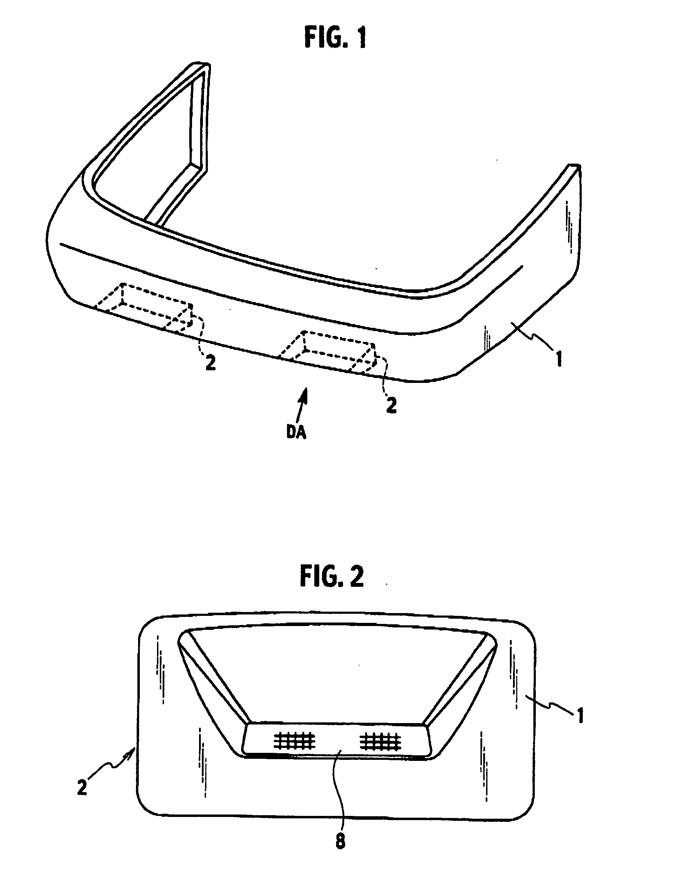

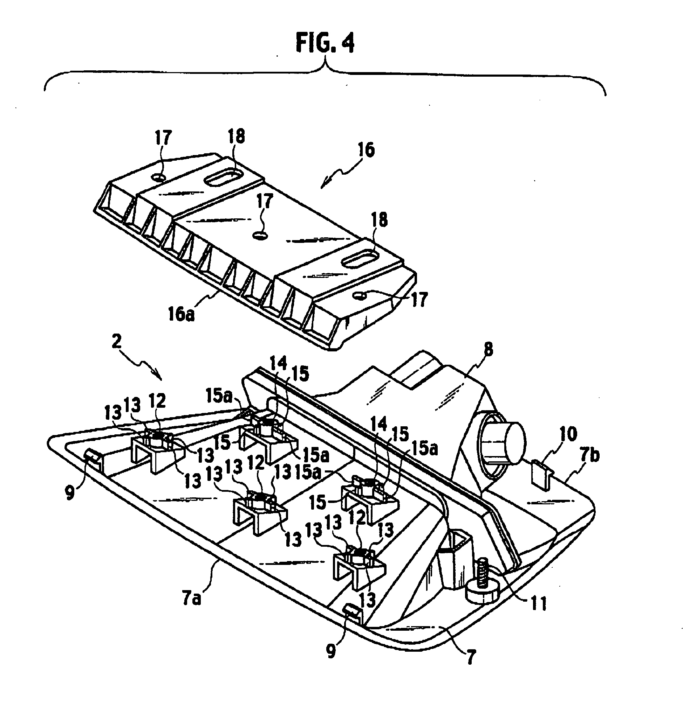

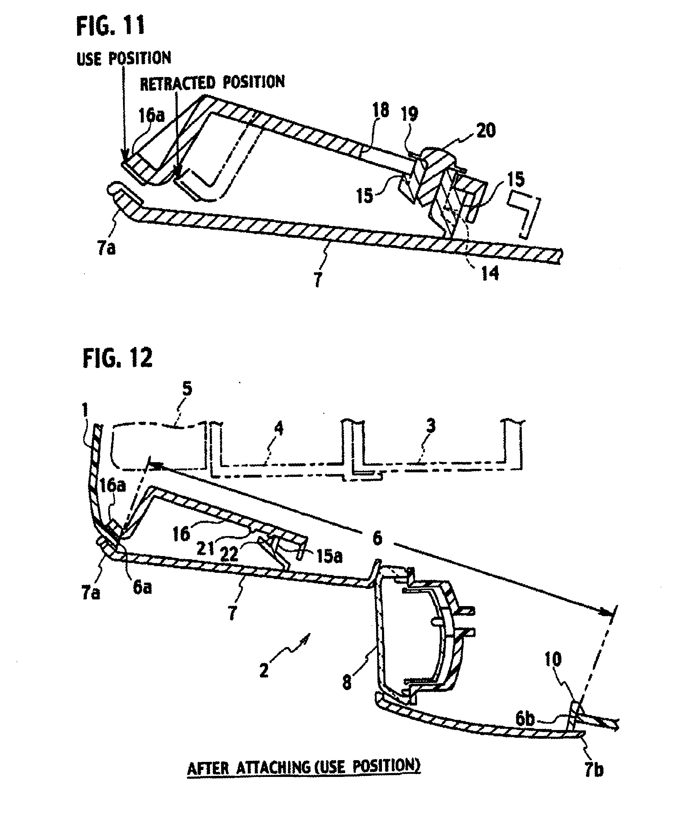

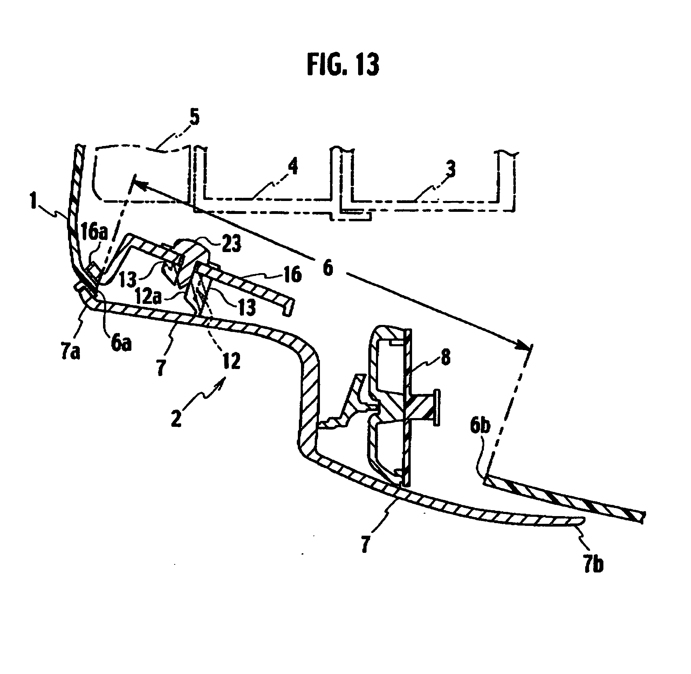

Figs. 1 to 13 show an embodiment of the present invention. A pair of fog lamps 2 is disposed at lower backward portions of a rear bumper 1 at the rear side of a vehicular body. Inside the bumper 1, a reinforcement 3, a stay 4, a shock absorber 5 are provided. At the lower backward portions of the bumper 1, openings 6 are formed and the substantially-trapezoidal-shaped fog lamps 2 are attached therein.

Each of the fog lamps 2 has an annular frame member 7 and a lamp body 8 fixed in the frame member 7 in a manner of being exposed backwardly. The frame member 7 includes an upper side frame portion and a lower side frame portion and a lift side frame portion and a fright side frame portion so as to be formed in a annular shape. An outer circumference of the frame member 7 is formed larger than the opening 6 so that the frame member 7 contacts a periphery of the opening 6. At an upper end 7a of the upper side frame portion of the frame member 7, a pair of catches 9 are provided. At a lower end 7b of the lower side frame portion of the frame member 7, a pair of catches 10 are provided. Each of the catches 9, 10 is formed with an arm projected from the back face of the frame member 7 and a claw formed at the tip of the arm. The catches 9, 10 are configured to be engaged with an upper edge 6a and a lower edge 6b of the opening 6 from the outer face of the bumper 1. On the right and left sides of the frame member 7 in the vehicular width direction, fixing screws 11, which are configured to be inserted into fixing holes (not shown) of the bumper 1, are mounted.

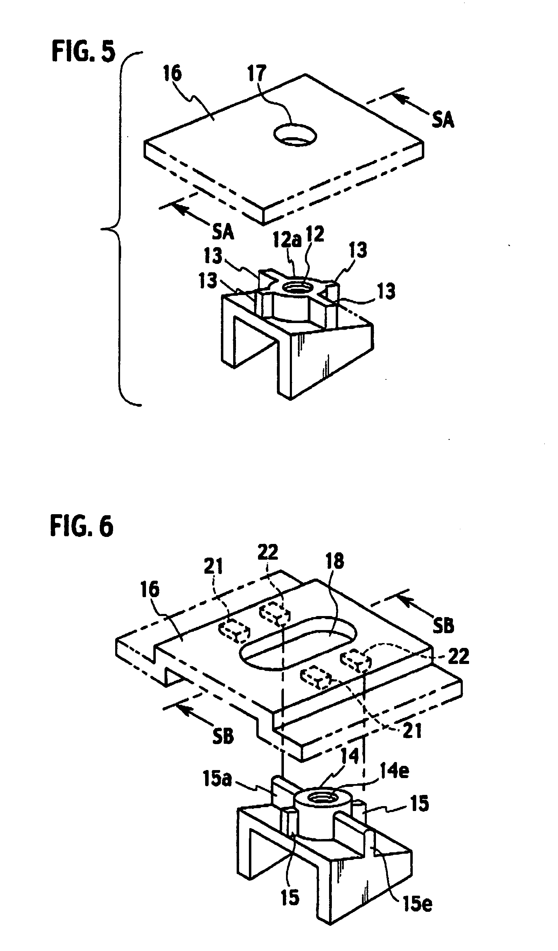

Three bosses (fastened portions) 12 are formed on the back face of the upper side frame portion of the frame member 7 and are aligned in the vehicular width direction. Each of the bosses 12 has a screw hole 12a in its center portion and is formed with ribs 13 extending radially in four directions therearound (see Fig. 5).

Two bosses 14 are formed on the back face of upper side frame portion of the frame member and are aligned in the vehicular width direction. The bosses 14 are disposed closer to the lamp body 8 than the bosses 12. Each of the bosses 14 also has a screw hole 14a in its center portion and is formed with ribs 15, 15a extending radially in four directions therearound. The ribs 15a disposed in the right and left sides of the bosses 14 are formed slightly longer than the ribs 15 disposed in the upper and lower sides of the bosses 14. The tips of the ribs 15a are formed in a round shape (see Fig. 6).

On the back face of the upper side frame portion the frame member 7, a metal bracket 16 is attached. The bracket 16 has three through holes (fastened portions) 17 configured to be fixed to the three bosses 12 respectively and two long holes 18 configured to be fixed to the two bosses 14 respectively. The two long holes 18 extend in the sliding direction of the bracket 16 (a vehicle longitudinal direction).

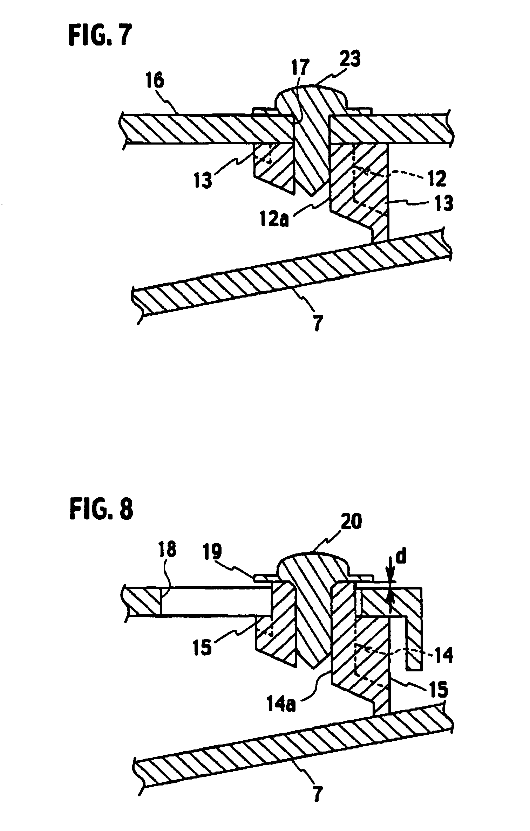

The bracket 16 is attached on the frame member 7 such that the bosses 14 of the frame member 7 are inserted into the long holes 18 of the bracket 16. The periphery of the long hole 18 is in contact with the tip of the ribs 15, 15a of the boss 14, and the boss 14 extends though the long hole 18 such that the upper portion of the boss 14 is projected out of the long hole 18 at a degree of a predetermined dimension d (see Fig. 8). Each of the screw holes 14a of the bosses 14 is screwed with a screw 20. A flange 19 of the screw 20 is formed larger than the width of the long hole 18. Since the flange 19 is wider than the long hole 18, the boss 14 will not come off through the long hole 18 so that the bracket 16 is surely attached to the frame member 7.

With this structure, the bracket 16 is slidably attached to the frame member 7 between a retracted position at the inner side of the frame member 7 and a use position at the outer side of the frame member 7. In the use position, the upper end 16a of the bracket 16 opposes substantially to the upper end 7a of the frame member 7. When the bracket 16 is in the use position, the three through holes 17 are opposed to the screw holes 12a of the three bosses 12, respectively.

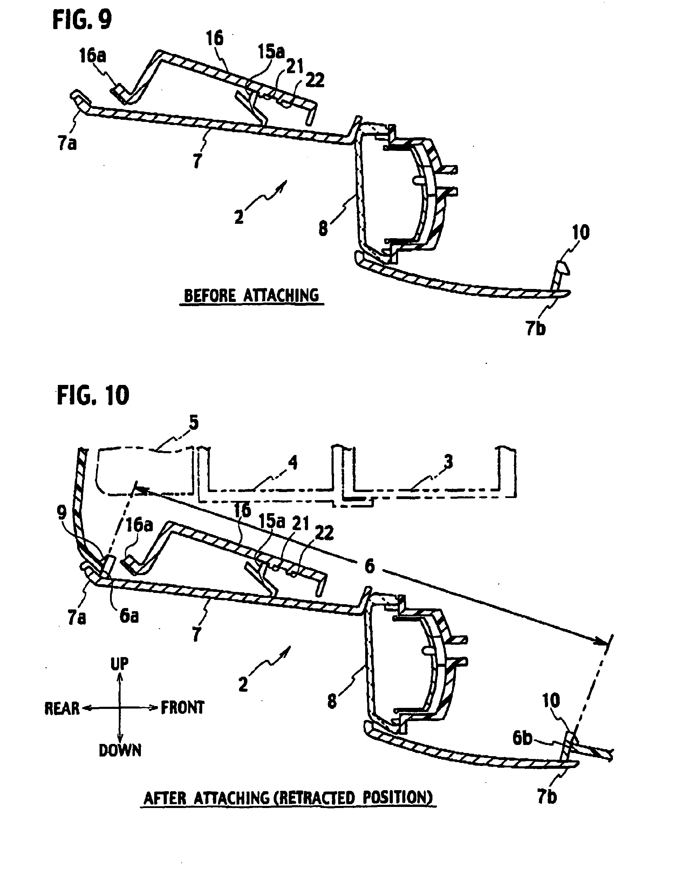

As shown in Figs. 6 and 9, on the back face of the bracket 16, pairs of projections 21, 22 are formed on the right and left sides of the each long holes 18 in the vehicular width direction. The upper projections 21 on the side of the upper end 16a are respectively engagable with the ribs 15a of the bosses 14 to lock the bracket 16 in the retracted position. Similarly, the lower projections 22 on the side of the lamp body 8 are respectively engagable with the ribs 15a to lock the bracket 16 in the use position. The engagements between the ribs 15a and the projections 21, 22 can be released by pushing the bracket 16 forwardly or backwardly. The projections 21 and the ribs 15a work as " first locking means", and the projections 22 and the ribs 15a work as " first locking means".

A procedure for attaching the fog lamp 2 to the opening 6 of the bumper 1 will be described.

Firstly, the bracket 16 is set in the retracted position on the frame member 7. The bracket 16 is locked in the retracted position by the first locking means 15a, 21, that is, the ribs 15a and the projections 21. With this structure, the bracket 16 will be locked temporally in the retracted position when the fog lamp 2 is delivered or placed in any postures.

The fog lamp 2 is inserted into the opening 6 from outside of the bumper 1 in a direction toward the front of the vehicle. When the fog lamp 2 is inserted into the opening 6, firstly, the catches 10 formed at the lower end 7b of the frame member 7 is engaged to the lower edge 6b of the opening 6. Here, the bracket 16 is temporally locked in the retracted position, so that the fog lamp 2 can be set to the opening 6 from the outside of the bumper 1 without any difficulty.

Next, the upper portion of the frame member 7 is rotated upwardly toward the opening 6 by using the lower catches 10 as supporting points in order to engage the upper catches 9 to the upper edge 6a of the opening 6. Here, at the same time, the fixing screws 11 on the right and left sides of the frame member 7 are inserted into the fixing holes (not shown) of the bumper 1.

In this state, the bracket 16 is pushed so as to release the engagements of the ribs 15a and the projections 21 and to engage the ribs 15a to the projections 22. With this, the bracket 16 is locked in the use position. The upper end of the boss 14 is projected through the long hole 18 with the predetermined dimension d so that the flange 19 of the screw 20 attached on the tip of the boss 14 does not contact with the bracket 16. Accordingly, the bracket 16 can be slid without any difficulty when the bracket 16 is pushed forwardly or backwardly.

When the bracket 16 is set in the use position, the upper edge 6a of the opening 6 is held by the upper end 7a of the frame member 7 and the upper end 16a of the bracket 16 in a manner of being sandwiched therebetween and the three through holes 17 of the bracket 16 are in line with the screw holes 12a of the three bosses 12 of the frame member 7.

Since the upper edge 6a of the opening 6 is held between the upper end 7a of the upper side frame portion of the frame member 7 and the upper end 16a of the bracket 16, the fog lamp 2 is provisionally fixed to the opening 6. Accordingly, an operator is able to work without supporting the fog lamp 2 by his or her hand. The operator is able to screw the screws 23 (fastening means) into the bosses 12 through the through holes 17 using his or her both hands.

In this step, since the bracket 16 is locked in the use position without any supports by hands, it is easy to screw the screws 23 to fasten the bracket 16 to the frame member 7. Finally, screwing nuts (not shown) to the fixing screws 11 extending though the fixing holes (not shown) of the bumper 1, so that the fog lamp attachment process is completed.

As described above, the bracket 16 can be locked in the retracted position or the use position. Accordingly, when the bracket 16 is locked in the retracted position, it is easy for the operator to set the fog lamp 2 to the opening 6 from outside of the bumper 1. In other words, the attaching operation will not be disturbed by the presence of the bracket 16. In addition, when the bracket is locked in the use position, it is easy for the operator to fasten the bracket 16 to the frame member 7 by fastening means.

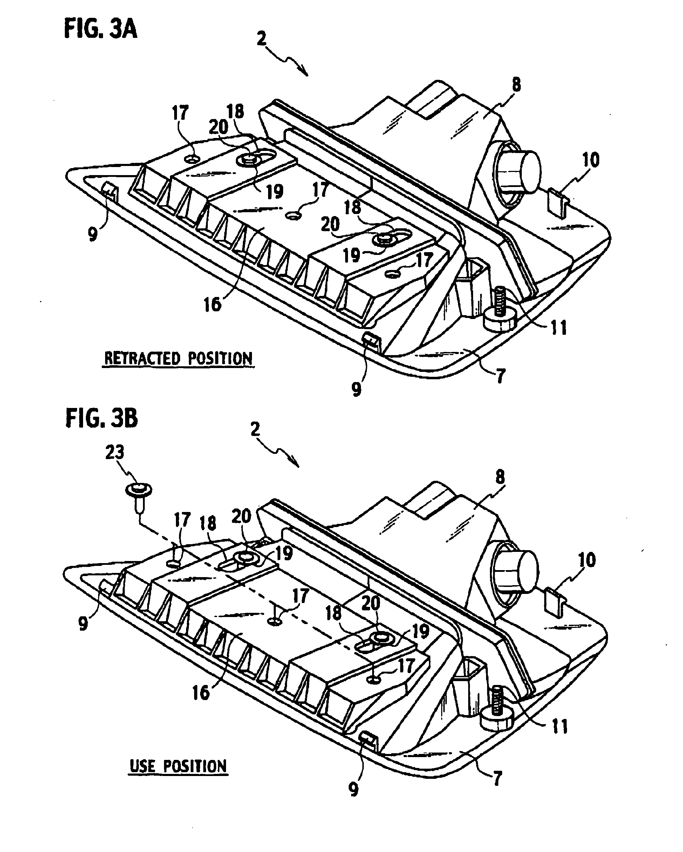

Characteristics of the present embodiment will be described.
(1) According to the present embodiment, a vehicular lamp (a fog lamp 2) includes a frame member 7 of a lamp body 8 configured to abut on a periphery of a lamp attachment opening 6 formed in a vehicular body (bumper 1), and a bracket 16 slidably attached to a back face of the frame member 7. The bracket 16 is slidable between a retracted position (see Fig. 3A) at the inner side of the frame member 7 and a use position (see Fig. 3B) at the outer side of the frame member 7.
   When the outer portion of the frame member 7 is placed to abut on the periphery of the lamp attachment opening 6 and the bracket 16 is slid from the retracted position to the use position, the periphery of the lamp attachment opening 6 is sandwiched between the bracket 16 and the frame member 7 so that the vehicular lamp 2 is provisionally fixed in the lamp attachment opening 6.
   With such a provisional fixing structure of the vehicular lamp 2, the attaching operation of the vehicular lamp 2 becomes much easier. Further, since the bracket 16 is slidably attached on the back face of the frame member 7, it is effective in delivery and parts management compared to a structure in which a vehicular lamp and a bracket have to be prepared separately.
   Therefore, the fog lamp of the present embodiment is effective for reducing the cost including attachment operation cost, delivery cost and parts management cost for the vehicular lamp 2.
(2) According to the present embodiment, the frame member 7 is formed with a catches 10 for engaging with the periphery of the lamp attachment opening 6 of the vehicular body 1, at opposite side of the bracket 16 with respect to the lamp body 8.
   With this, when the vehicular lamp 2 is set into the lamp attachment opening 6 from outside of the lamp attachment opening 6, parts of the vehicular lamp 2 (catches 10) is engaged with the periphery of the lamp attachment opening 6 so that the parts of the vehicular lamp 2 is provisionally fixed in the lamp attachment opening 6. With this structure, it becomes easier to slide the bracket 16 from the retracted position to the use position.
   Further, when the vehicular lamp 2 is set into the lamp attachment opening 6 from outside of the lamp attachment opening 6, and the bracket 16 is slid to the use position, the vehicular lamp 2 is provisionally fixed to lamp attachment opening 6 by the catches 10 and bracket 16 that are disposed at opposites sides with respect to the lamp body 8, so that the provisional fixing condition is ensured. This makes the fastening operation for fastening the vehicular lamp 2 to the vehicular body 1 easier.
(3) According to the present embodiment, the lamp attachment opening 6 is overhanged and inclined such that its upper end projected to outside (to the back of the vehicle) than its lower end. In such a structure, the vehicular lamp 2 easily falls from the lamp attachment opening 6 due to the weight of the vehicular lamp 2 itself. Thus, the effects of the provisional fixing function in the above items (1) and (2) work further effectively.
(4) According to the present embodiment, the first locking means (ribs 15a and projections 22) for engaging with each other to lock the bracket 16 in the retracted position is provided. Accordingly, the bracket 16 is surely fixed in the retracted position without any supports by hand. The bracket 16 in the retracted position will not disturb the attaching operation of the vehicle lamp 2 so that the working efficiency will be further improved.
(5) According to the present embodiment, the second locking means (ribs 15a and projections 21) for engaging with each other to lock the bracket 16 in the use position is provided. Accordingly, the bracket 16 is surely fixed in the retracted position without any supports by hand. It becomes easier to fasten the vehicular lamp 2 to the vehicular body 1 by a fastening means (screw 11 and nut).
(6) According to the present embodiment, the first locking means includes a projection (ribs 15a) projected from the back face of the frame member 7 and a projection 21 projected from the bracket 16 to engage with the projection 15a of the frame member 7. With this structure, the fist locking means is made in a simple structure.
(7) According to the present embodiment, the second locking means includes a projection (ribs 15a) projected from the back face of the frame member 7 and a projection 22 projected from the bracket 16 to engage with the projection 15a of the frame member 7. With this structure, the second locking means is made in a simple structure.
(8) According to the present embodiment, the frame member 7 and the bracket 16 include fastened portions (bosses 12 and through holes 17) oppose each other in the use position. With this structure, the bracket 16 is surely fixed in the use position by fastening the fastened positions 12, 17 with a fastening means (screw 23).
(9) According to the present embodiment, the sliding mechanism for slidably attaching the bracket 16 on the back face of the frame member 7 includes a long hole 18 opened in the bracket 16 and extending along the sliding direction of the bracket 16, a boss 14 projected from the back face of the frame member 7 and extending through the long hole 18 of the bracket 16, and a flange 19 provided on the top of the boss 14 and formed larger than the width of the long hole 18. With this structure, the sliding mechanism is made in a simple structure. The flange 19 is formed integrally with a head of the screw 20 in the present embodiment, the flange 19 may be a washer that provided independently from the head of the screw 20 or the flange 19 may be the head of the screw 20 itself.
(10) According to the present embodiment, the upper portion of the boss 14 is projected out of the long hole 18 with the predetermined dimension d so that there is a gap d between the flange 19 and the bracket 16 (see Fig. 8). Accordingly, the gap d between the flange 19 and the bracket 16 ensures the smooth slide of the bracket 16.
(11) According to the present embodiment, the vehicular lamp attachment method includes inserting: a vehicular lamp 2 into a lamp attachment opening 6 formed in a vehicular body 1 from outside of the vehicular body 1 to make a frame member 7 formed around a lamp body 8 of the vehicular lamp 2 abut on a periphery of the lamp attachment opening 6; sliding a bracket 16 slidably attached on a back face of the frame member 7 of the lamp body 8 from a retracted position at an inner portion of the frame member 7 to a use position at an outer portion of the frame member 7 to sandwich the periphery of the lamp attachment opening 6 between the bracket 16 and the frame member 7 to fix the vehicular lamp 2 in the lamp attachment opening 6; and fastening the fixed vehicular lamp 2 to the periphery of the lamp attachment opening 6 by a fastening means (a screw 11 and a nut). With this attachment method, the attaching operation becomes easier as described in the above item (1).

Although the above embodiment is described as a case of fog lamps 2, the present invention may be applicable to other types of lamps than the fog lamp 2. Also, the locking means is described as ribs 15a and projections 21, 22 but the present invention should not be limited to the above embodiment. Further, the means for preventing the boss 14 from disengaging from the long hole 18 without contacting with the boss 14 should not limited to the above embodiment.

## Claims

1. A vehicular lamp (2) comprising:
a frame member (7) of a lamp body (8) configured to be placeable to abut on a periphery of a lamp attachment opening (6) formed in a vehicular body (1); and a bracket (16) slidably attached to a back face of the frame member (7) and slidable on the back face on the frame member (7) between a retracted position at an inner portion of the frame member (7) and a use position at an outer portion of the frame member (7) **characterized in that**
the frame member (7) is adapted to be insertable into the lamp attachment opening (6) of the vehicular body (1) together with the bracket (16) when the bracket (16) is placed in the retracted position,
wherein the vehicular lamp (2) is adapted to hold a peripheral edge of the lamp attachment opening (6) between the bracket (16) and the frame member (7) when the bracket (16) is in the use position and when the frame member (7) abuts against a back face of the peripheral edge of the lamp attachment opening (6).

2. The vehicular lamp (2) according to one of Claim 1,
wherein the frame member (7) is formed with a catch (10) for engaging with the lamp attachment opening (6) of the vehicular body (1).

3. The vehicular lamp (2) according to one of Claims 1 to 2, further comprising a first locking means (15, 21) for locking the bracket (16) in the retracted position.

4. The vehicular lamp (2) according to one of Claims 1 to 2, further comprising a second locking means (15, 22) for locking the bracket (16) in the use position.

5. The vehicular lamp (2) according to Claim 3, wherein
the first locking means (15, 21) includes a projection (15) projected from the back face of the frame member (7) and a projection (21) projected from the bracket (16) to engage with the projection (15) of the frame member (7).

6. The vehicular lamp (2) according to Claim 4, wherein
the second locking means (15, 22) includes a projection (15) projected from the back face of the frame member (7) and a projection (22) projected from the bracket (16) to engage with the projection (15) of the frame member (7).

7. The vehicular lamp (2) according to one of Claims 4 and 5, wherein
the frame member (7) and the bracket (16) includes fastened portions (12, 17) that opposes each other in the use position, the fastened portions (12, 17) configured to be fastened by a fastening means.

8. The vehicular lamp (2) according to one of Claims 1 to 7, wherein
the sliding mechanism for slidably attaching the bracket (16) on the back face of the frame member (7) includes
a long hole (18) formed in the bracket (16) and extending along the sliding direction of the bracket (16),
a boss (14) projected from the back face of the frame member (7) and extending through the long hole (18) of the bracket (16), and
a flange (19) attached on the tip of the boss (14) and formed larger than the width of the long hole (18).

## Patentansprüche

1. Fahrzeugleuchte (2), die umfasst:
ein Rahmenelement (7) eines Leuchtenkörpers (8), das so eingerichtet ist, dass es um einen Umfang einer Leuchten-Anbringungsöffnung (6) herum anliegend angebracht werden kann, die in einer Fahrzeugkarosserie (1) ausgebildet ist, und einen Träger (16), der verschiebbar an einer Rückseite des Rahmenelementes (7) angebracht ist und an der Rückseite an dem Rahmenelement (7) zwischen einer eingezogenen Position an einem inneren Abschnitt des Rahmenelementes (7) und einer Einsatzposition an einem äußeren Abschnitt des Rahmenelementes (7) verschoben werden kann,
**dadurch gekennzeichnet, dass**
das Rahmenelement (7) so eingerichtet ist, dass es zusammen mit dem Träger (16) in die Leuchten-Anbringungsöffnung (6) der Fahrzeugkarosserie (1) eingeführt werden kann, wenn sich der Träger (16) in der eingezogenen Position befindet,
wobei die Fahrzeugleuchte (2) so eingerichtet ist, dass sie einen Umfangsrand der Leuchten-Anbringungsöffnung (6) zwischen dem Träger (16) und dem Rahmenelement (7) hält, wenn sich der Träger (16) in der Einsatzposition befindet und wenn das Rahmenelement (7) an einer Rückseite des Umfangsrandes der Leuchten-Anbringungsöffnung (6) anliegt.

2. Fahrzeugleuchte (2) nach Anspruch 1,
wobei das Rahmenelement (7) mit einem Haken (10) versehen ist, der mit der Leuchten-Anbringungsöffnung (6) der Fahrzeugkarosserie (1) in Eingriff kommt.

3. Fahrzeugleuchte (2) nach einem der Ansprüche 1 bis 2, die des Weiteren eine erste Arretiereinrichtung (15, 21) zum Arretieren des Trägers (16) in der eingezogenen Position umfasst.

4. Fahrzeugleuchte (2) nach einem der Ansprüche 1 bis 2, die des Weiteren eine zweite Arretiereinrichtung (15, 22) zum Arretieren des Trägers (16) in der Einsatzposition umfasst.

5. Fahrzeugleuchte (2) nach Anspruch 3, wobei
die erste Arretiereinrichtung (15, 21) einen Vorsprung (15), der von der Rückseite des Rahmenelementes (7) vorsteht, und einen Vorsprung (21) enthält, der von dem Träger (16) vorsteht und mit dem Vorsprung (15) des Rahmenelementes (7) in Eingriff kommt.

6. Fahrzeugleuchte (2) nach Anspruch 4, wobei
die zweite Arretiereinrichtung (15, 22) einen Vorsprung (15), der von der Rückseite des Rahmenelementes (7) vorsteht und einen Vorsprung (22) enthält, der von dem Träger (16) vorsteht und mit dem Vorsprung (15) des Rahmenelementes (7) in Eingriff kommt.

7. Fahrzeugleuchte (2) nach einem der Ansprüche 4 und 5, wobei
das Rahmenelement (7) und der Träger (16) befestigte Abschnitte (12, 17) enthalten, die einander in der Einsatzposition gegenüberliegen, wobei die befestigten Abschnitte (12, 17) zum Befestigen mittels einer Befestigungseinrichtung eingerichtet sind.

8. Fahrzeugleuchte (2) nach einem der Ansprüche 1 bis 7, wobei
der Verschiebemechanismus zum verschiebbaren Anbringen des Trägers (16) an der Rückseite des Rahmenelementes (7) enthält:
ein Langloch (18), das in dem Träger (16) ausgebildet ist und sich in der Verschieberichtung des Trägers (16) erstreckt,
einen Sockel (14), der von der Rückseite des Rahmenelementes (7) vorsteht und sich durch das Langloch (18) des Trägers (16) hindurch erstreckt, und
einen Flansch (19), der an dem vorderen Ende des Sockels (14) angebracht ist und gröβer ausgebildet ist als die Breite des Langloches (18).

## Revendications

1. Lampe de véhicule (2) comprenant:
un élément formant cadre (7) d'un corps de lampe (8) conçu pour pouvoir être placé en butée sur une périphérie d'une ouverture de montage de lampe (6) formée dans un corps de véhicule (1) ; et un support (16) monté coulissant sur une face arrière de l'élément formant cadre (7) et apte à coulisser sur la face arrière sur celui-ci entre une position rétractée, sur une partie intérieure de l'élément formant cadre (7), et une position d'utilisation sur une partie extérieure de l'élément formant cadre (7),
**caractérisée en ce que** l'élément formant cadre (7) est apte à être inséré dans l'ouverture de montage de lampe (6) du corps de véhicule (1) conjointement avec le support (16) quand celui-ci est en position rétractée,
étant précisé que la lampe de véhicule (2) est apte à retenir un bord périphérique de l'ouverture de montage de lampe (6) entre le support (16) et l'élément formant cadre (7) quand ledit support (16) est en position d'utilisation et quand l'élément formant cadre (7) bute contre une face arrière du bord périphérique de l'ouverture de montage de lampe (6).

2. Lampe de véhicule (2) selon la revendication 1, étant précisé que l'élément formant cadre (7) est pourvu d'un élément d'arrêt (10) destiné à s'enclencher avec l'ouverture de montage de lampe (6) du corps de véhicule (1).

3. Lampe de véhicule (2) selon l'une des revendications 1 à 2, comprenant par ailleurs des premiers moyens de verrouillage (15, 21) pour verrouiller le support (16) en position rétractée.

4. Lampe de véhicule (2) selon l'une des revendications 1 à 2, comprenant par ailleurs des seconds moyens de verrouillage (15, 22) pour verrouiller le support (16) en position d'utilisation.

5. Lampe de véhicule (2) selon la revendication 3, étant précisé que les premiers moyens de verrouillage (15, 21) comprennent une saillie (15) qui dépasse de la face arrière de l'élément formant cadre (7), et une saillie (21) qui dépasse du support (16) pour s'enclencher avec la saillie (15) de l'élément formant cadre (7).

6. Lampe de véhicule (2) selon la revendication 4, étant précisé que les seconds moyens de verrouillage (15, 22) comprennent une saillie (15) qui dépasse de la face arrière de l'élément formant cadre (7) et une saillie (22) qui dépasse du support (16) pour s'enclencher avec la saillie (15) de l'élément formant cadre (7).

7. Lampe de véhicule (2) selon l'une des revendications 4 et 5, étant précisé que l'élément formant cadre (7) et le support (16) comprennent des parties fixées (12, 17) qui se font face en position d'utilisation, les parties fixées (12, 17) étant conçues pour être fixées par des moyens de fixation.

8. Lampe de véhicule (2) selon l'une des revendications 1 à 7, étant précisé que le mécanisme de coulissement destiné au montage coulissant du support (16) sur la face arrière de l'élément formant cadre (7) comprend
un trou long (18) qui est formé dans le support (16) et qui s'étend le long de la direction de coulissement du support (16),
un bossage (14) qui dépasse de la face arrière de l'élément formant cadre (7) et qui traverse le trou long (18) du support (16), et
une collerette (19) qui est montée à la pointe du bossage (14) et qui est plus grande que la largeur du trou long (18).
